# EUROPÄISCHE PATENTSCHRIFT

(11) **EP 0 748 988 B1**
(45) Veröffentlichungstag und Bekanntmachung des Hinweises auf die Patenterteilung: **15.09.1999**
(21) Anmeldenummer: 96109667.4
(22) Anmeldetag: 17.06.1996
(51) Int. Cl.: F24D 3/14

(54) **Vorrichtung zum Festlegen von Rohrleitungen**
Apparatus for fixing conduits
Dispositif de fixation de tuyaux

(30) Priorität: 16.06.1995 DE 29509523 U; 27.06.1995 DE 29510375 U; 18.08.1995 DE 19530367; 29.03.1996 DE 19612789
(43) Veröffentlichungstag der Anmeldung: 18.12.1996
(73) Patentinhaber: FUGO AG, 8280 Kreuzlingen (CH)
(72) Erfinder: Fuchs, Martin, Dipl.-Ing., 78464 Konstanz (DE)
(74) Vertreter: Hiebsch, Gerhard F., Dipl.-Ing.

(56) Entgegenhaltungen:
- EP-A- 0 059 252
- DE-A- 3 105 816
- DE-A- 4 116 620
- US-A- 4 338 994

## Beschreibung

Die Erfindung betrifft eine Vorrichtung zum Festlegen von Rohrleitungen, insbesondere der Rohre eines Heizungssystems, nach dem Oberbegriff des Patentanspruchs 1.

Die auf dem Markt befindlichen Heizungsrohre aus flexiblem Werkstoff werden entweder mittels einer abschnittsweisen Schüttung auf dem Rohfußboden festgelegt oder in sog. Dämmhülsen eingeschoben. Derartige, bekannte Dämmhülsen bestehen jeweils aus einem U-förmig gebogenen Kunststoffstreifen, dessen freie Schenkelenden durch einen relativ hohen Isolierstreifen verbunden sind und einen Schubkanal für das Rohr anbieten. Nach dessen Einschieben in die Dämmhülse wird dieses mit dem Isolierstreifen auf den Rohfußboden gestellt und dann mit Isolierschichten seitlich und von oben her abgedeckt. Nachteilig ist bei diesen Systemen vor allem die schlechte Handhabbarkeit sowie die aufwendige Montage:

Bisher mußte nämlich zuerst Maß genommen werden, dann das zu verlegende Rohr entsprechend abgelängt werden, woraufhin Schellen zu setzen waren und das Rohr montiert und isoliert wurde. Bei der zusätzlichen Montage von Dämmhülsen mußten auch diese zunächst abgelängt und dann mühsam und zeitaufwendig auf das Rohr geschoben werden, woraufhin dann die Anordnung zu befestigen war. Bei diesen Verlegearbeiten wurden in der Regel zwei Arbeiter benötigt, zudem war die Arbeit mit Rohrbiegegeräten schwierig.

Für dieses aus dem Stand der Technik bekannte Verlegeverfahren für Heizungsrohre sind Doppelschellen bekannt; zwei, die Rohre klemmend aufnehmende Kunststoffschellen aus jeweils zwei teilkreisartigen Klemmbacken, die nebeneinander an einen sie verbindenden Streifen angeformt sind, der zwischen den Schellen mit einem Durchbruch für eine Befestigungsschraube versehen ist.

Aus der US 4,338,994 ist ein System zum Verlegen von Heizungsrohren, insbesondere für eine Fußbodenheizung, bekannt. Diese Anordnung aus dem Stand der Technik weist plattenförmige Grundelemente ("Panels") auf, die zum Bedecken einer Bodenfläche aneinander ansetzbar sind, und die Halteelemente zum Führen einer Rohrleitung aufnehmen. Die Bodenplatten sind aus isolierendem Material hergestellt und weisen zum Einsetzen der Halteelemente quadratische oder kreisförmige Vertiefungen auf.

Eine derartige, bekannte Vorrichtung ist jedoch primär zum flächendeckenden Verlegen einer Heizschlange vorgesehen und bedeckt zu diesem Zweck auch großflächig den unterliegenden Rohfußboden. Auch gibt es keine feste Verbindung zwischen den das Rohr führenden Halteelementen und dem unterliegenden Fußboden.

Aufgabe der vorliegenden Erfindung ist es daher, die gattungsgemäßen, beschriebenen Befestigungsvorrichtungen für Rohrleitungen auf einem unterliegenden Rohfußboden od. dgl. zu verbessern, wobei insbesondere eine Vereinfachung der Herstellung einer solchen Befestigungsvorrichtung bzw. auch eine Abfallvermeidung beim Verlegen bezweckt werden soll, ohne daß etwa die Verlegeeigenschaften bzw. die Handhabbarkeit einer solchen Vorrichtung (Anordnung) in nachteiliger Weise beeinflußt wären.

Diese Aufgabe wird durch die Merkmale des Patentanspruchs 1 gelöst.

So ermöglicht vorteilhaft das Vorsehen der ringförmigen Schlitze im isolierenden Material, daß dort ein Halteelement zum Führen bzw. Halten einer Rohrleitung eingesetzt bzw. befestigt werden kann, ohne daß an dieser Stelle entsprechendes Isoliermaterial (abfallträchtig) entfernt werden muß; vielmehr wird dieses lediglich punktuell (beschränkt auf den ringförmigen Bereich) zusammengedrückt und sorgt für vorteilhafte Wärme- bzw. Trittschallisolation in diesem Bereich.

In diesem Zusammenhang ist als "ringförmig" im anspruchsgemäßen Sinne jede oberflächenseitig geschlossene Schlitzkontur zu verstehen, die geeignet ist, einen bestimmten Bereich vollständig oder weitgehend zu umschließen; insbesondere auch rechteckförmige, elliptische oder andere Schlitzverläufe in der Oberfläche der streifenförmigen Schlitze gelten als von der Erfindung mitumfaßt.

Vorteilhafte, weitere Ausbildungen der Erfindung sind in den Unteransprüchen beschrieben.

So sind besonders bevorzugt die umschlossenen Bereiche entlang des Verlaufs der streifenförmigen Schicht -- der dem Verlauf einer zu verlegenden Rohrleitung folgt -- in konstanten Abständen vorgesehen. Durch einfaches Abzählen der umschlossenen Bereiche und Multiplikation mit dem (bekannten) konstanten Abstand ist somit die einfache Ermittlung einer benötigten Rohrleitungslänge möglich, ohne daß ein separates Ausmessen erfolgen muß.

Besonders vorteilhaft ist zudem der ringförmige Schlitz kreisringförmig; dies erleichtert insbesondere das Einformen des Schlitzes in dem isolierenden Material durch z. B. ein rotierendes Werkzeug.

Weiter bevorzugt ist in jedem umschlossenen Bereich eine Mehrzahl von konzentrischen, kreisförmigen Schlitzen gebildet. Durch diese Maßnahme wird insbesondere das horizontale Biegen der streifenförmigen Schicht (in der Verlegeebene) vereinfacht, da die kreisförmigen Schlitze die entsprechende Deformation des isolierenden Materials erleichtern bzw. lenken.

Bevorzugt weist ferner das zum Halten einer Rohrleitung vorgesehene Halteelement eine bodenseitige Druckplatte auf, die mit ihrer Bodenfläche auf den umschlossenen Bereich eine Druckkraft ausübt und auf diese Weise die Kompression des isolierenden Materials in diesem Bereich herbeiführt. Besonders bevorzugt wird dann die Druckplatte in der Druckstellung (d. h. im eingesetzten Zustand) über eine Schraube oder einen Schießbolzen im unterliegenden Rohfußboden, durch das komprimierte isolierende Material hindurch, verankert.

Weiter bevorzugt ist zudem der Grundriß der Druckplatte polygonal, insbesondere hexagonal. Durch die so gebildeten Ecken wird insbesondere das Einführen bzw. Einsetzen der Halteelemente in die isolierende, streifenförmige Schicht erleichtert. Durch die Maßnahme, daß der größte Durchmesser der polygonalen Druckplatte geringfügig größer als der maximale Durchmesser des ringförmigen Schlitzes ist, wird zudem ein bodenseitiges, seitliches Eindringen der Druckplatte in das umgebene isolierende Material ermöglicht, wodurch zusätzlich die Verankerung verbessert wird. In diesem Zusammenhang ist als "geringfügig größer" dasjenige Maß zu verstehen, mit welchem die Druckplatte lateral in das umgebene isolierende Material außerhalb des ringförmigen Schlitzes hineinreichen kann, ohne wesentliche Deformationen der Gesamtanordnung herbeizuführen.

Entsprechend spitz zulaufende Kanten der Druckplatte erleichtern dieses Einführen.

Alternativ ist vorgesehen, die Druckplatte so auszubilden, daß eine Montage im Wege eines Hineindrehens in den durch den ringförmigen Schlitz vorgegebenen Bereich der streifenförmigen, isolierenden Schicht möglich ist.

Schließlich verhindert die Folienschicht vorteilhaft bei der Montage, daß zum Verfüllen des Bereichs der Rohrleitungen oberhalb bzw. auf der streifenförmigen Schicht während der Montage verwendetes, körniges Füllmaterial sich unkontrolliert verteilt.

Weitere Vorteile, Merkmale und Einzelheiten der vorliegenden Erfindung ergeben sich aus der nachfolgenden Beschreibung von Ausführungsbeispielen anhand der Zeichnung; diese zeigt in:
- Fig. 1:: eine geschnittene Seitenansicht des erfindungsgemäßen Isolierstreifens in Verlaufsrichtung mit einem eingesetzten, seitlich gezeigten Klemmelement;
- Fig. 2:: eine Draufsicht auf das Klemmelement gemäß Fig. 1;
- Fig. 3:: eine Unteransicht des Klemmelements nach Fig. 2;
- Fig. 4:: eine Seitenansicht des Klemmelements nach Fig. 2;
- Fig. 5:: eine horizontale Frontansicht des Klemmelements gemäß Fig. 2;
- Fig. 6:: eine Draufsicht auf den Isolierstreifen gemäß Fig. 1 ohne eingesetztes Klemmelement;
- Fig. 7:: eine Schnittansicht der erfindungsgemäßen Anordnung aus Isolierstreifen und Klemmelement im eingesetzten Zustand zwischen unterliegendem Rohrboden und aufliegendem Estrich gemäß einer bevorzugten Weiterbildung;
- Fig. 8:: eine alternative Ausführungsform des erfindungsgemäßen Klemmelements in der Seitenansicht, eingesetzt in einen Isolierstreifen;
- Fig. 9:: eine Seitenansicht des Klemmelements aus Fig. 8;
- Fig. 10:: eine horizontale Frontansicht des Klemmelements aus Fig. 8;
- Fig. 11:: eine Draufsicht auf das in den Fig. 9 und 10 gezeigte Klemmelement;
- Fig. 12:: die geschnittene Seitenansicht einer weiteren Ausführungsform der Befestigungsvorrichtung;
- Fig. 13,14:: die Draufsicht bzw. Seitenansicht einer Befestigungsplatte, insbesondere zur Verwendung in der Befestigungsvorrichtung gemäß Fig. 12;
- Fig. 15:: die Befestigungsplatte aus Fig. 13,14 in montiertem Zustand und geschnittener Seitenansicht;
- Fig. 16,17:: Seitenansichten eines zusätzlichen Schellen-bzw. Klemmeinsatzes zur Verwendung in der Befestigungsvorrichtung gemäß Fig. 12;
- Fig. 18 bis Fig. 20:: Ansichten eines Befestigungselements mit einer weiteren, bevorzugten Ausführungsform; und
- Fig. 21 bis Fig. 23:: Weiterbildungen der Ausführungsform gemäß Fig. 18 bis Fig. 20 mit einem geeignet ausgebildeten Isoliermaterialblock.

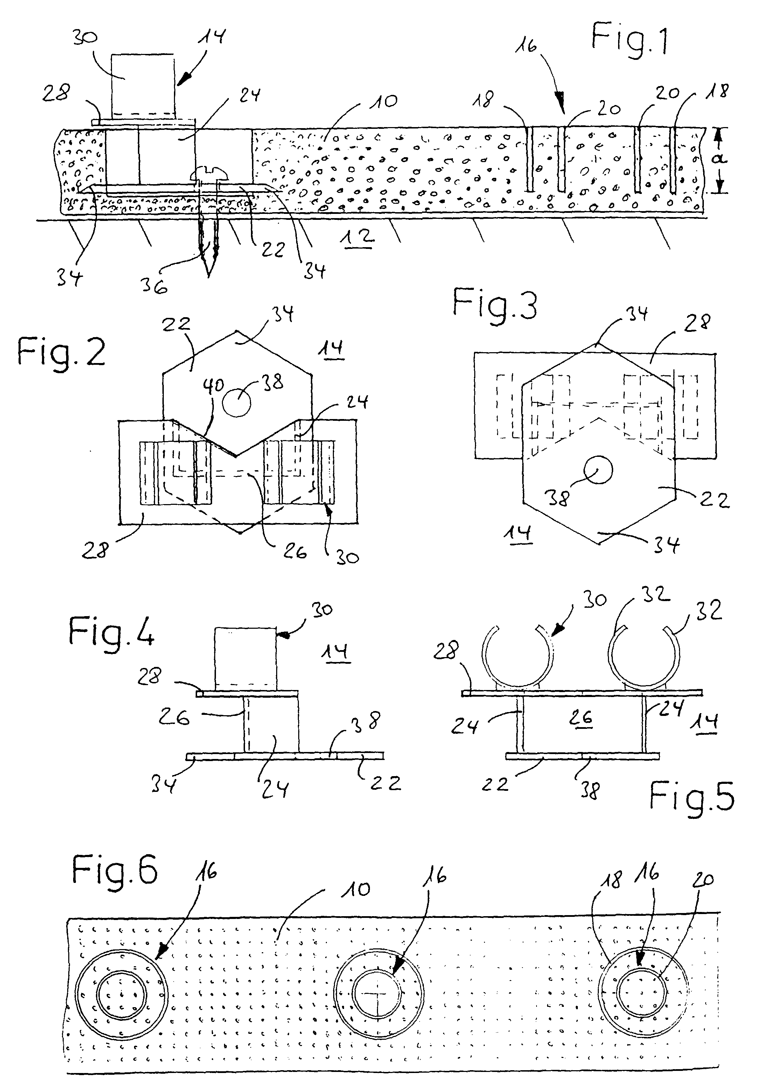

Die geschnittene Seitenansicht gemäß Fig. 1 bzw. die Draufsicht der Fig. 6 zeigen einen aus PE- oder PU-Schaum hergestellten, ca. 60 mm breiten und 20 mm hohen Vollschaum-Isolierstreifen 10, der weiterbildungsgemäß auf einem Rohfußboden 12 aufliegt und, insbesondere zusammen mit der in der Fig. 1 gezeigten Rohrschelle (Klemmelement) 14 die erfindungsgemäßen Vorteile realisiert.

Der Isolierstreifen weist eine Mehrzahl von Ringschlitzanordnungen 16 auf, die sich i. w. in konstanten Abständen -- 100 mm im dargestellten Ausführungsbeispiel -- in Längsrichtung des Isolierstreifens 10 erstrecken und jeweils einen äußeren Ringschlitz 18, der konzentrisch einen inneren Ringschlitz 20 umschließt, aufweisen. Wie in der Seitenansicht der Fig. 1 gezeigt, erstrecken sich die Ringschlitze von der dem Rohfußboden 12 entgegengesetzten Oberfläche des Isolierstreifens 10 einen vorbestimmten Abstand a von bevorzugt 15 mm in das Isoliermaterial hinein.

Wie im linken Bereich der Fig. 1 gezeigt, erlaubt nun die Ringschlitzanordnung 16 vorteilhaft das Einsetzen, (Längen-) Positionieren sowie Halten von Rohrschellen 14, mit welchen zugleich ein Festlegen der Gesamtanordnung auf dem unterliegenden Rohfußboden 12 möglich ist: Die in den Fig. 2 bis 4 im Detail dargestellte Rohrschelle 14 umfaßt nämlich eine bodenseitige, sechseckförmige Druck- bzw. Bodenplatte 22, die mittels zweier seitlicher Vertikalstege 24 bzw. eines mittleren Vertikalstegs 26, der die seitlichen Vertikalstege 24 verbindet, einen vorbestimmten Abstand von bevorzugt 13 mm parallel zu einer Basisplatte 28 gehalten ist. Von der Basisplatte 28 erstreckt sich wiederum auf der der Druckplatte 22 entgegengesetzten Oberfläche ein Paar von Klemmbackenanordnungen 30, die jeweils -- dem Rohrumfang eines zu haltenden Rohres 31 folgend -- als kreisbogenförmige, eine obere Einschuböffnung aufweisende Klemmbacken 32 realisiert sind.

Bevorzugt ist eine solche Rohrschelle 14 aus Druckplatte 22, Vertikalstegen 24,26, Basisplatte 28 und Klemmbackenanordnung 30 einstückig aus glasfaserverstärktem Kunststoff, weiter bevorzugt Polyamid, realisiert.

Die hexagonale Form der Druckplatte 22 mit spitz zulaufenden Endabschnitten 34 im Vorder- bzw. Rückbereich erlaubt dabei das einfache Einsetzen der Rohrschelle 14 in eine Ringschlitzanordnung 16, wobei der Abstand zwischen den Endabschnitten 34 so gewählt ist, daß er geringfügig größer als der Durchmesser des äußeren Ringschlitzes 18 ist, so daß der jeweils spitz zulaufende Endabschnitt 34, im eingesetzten Zustand, einen vorbestimmten Abstand in das Schaummaterial des Isolierstreifens 10 eindringen kann (vgl. Fig. 1, links).

Das innerhalb des äußeren Ringschlitzes 18 liegende Schaummaterial des Isolierstreifens 10 wird im eingesetzten Zustand der Rohrschelle 14 (Fig. 1, links) zusammengedrückt und befindet sich -- komprimiert auf eine Dicke von etwa 5 mm -- unterhalb der eingesetzten Druckplatte 22.

Mit Hilfe einer Schraube 36 (alternativ: eines Schießbolzens) ist die Rohrschelle 14 fest im unterliegenden Rohfußboden 12 verankert, wobei durch Wirkung der Druckplatte 22 gleichzeitig eine Festlegung des Isolierstreifens 10 erfolgt.

Wie in den Fig. 2 und 3 gezeigt, ist ein kreisförmiger Durchbruch 38 zum Hindurchführen der Schraube 36 bzw. eines Schießbolzens in der Druckplatte 22 vorgesehen, wobei zur Vereinfachung des Ansetzens eines Schraubers bzw. einer entsprechenden Bolzenschießeinrichtung bei der Montage die über der Druckplatte 22 parallel zu dieser liegende Basisplatte 28 einen stumpfwinkligen V-Ausschnitt 40 aufweist, der zum Durchbruch 38 hin offen ist.

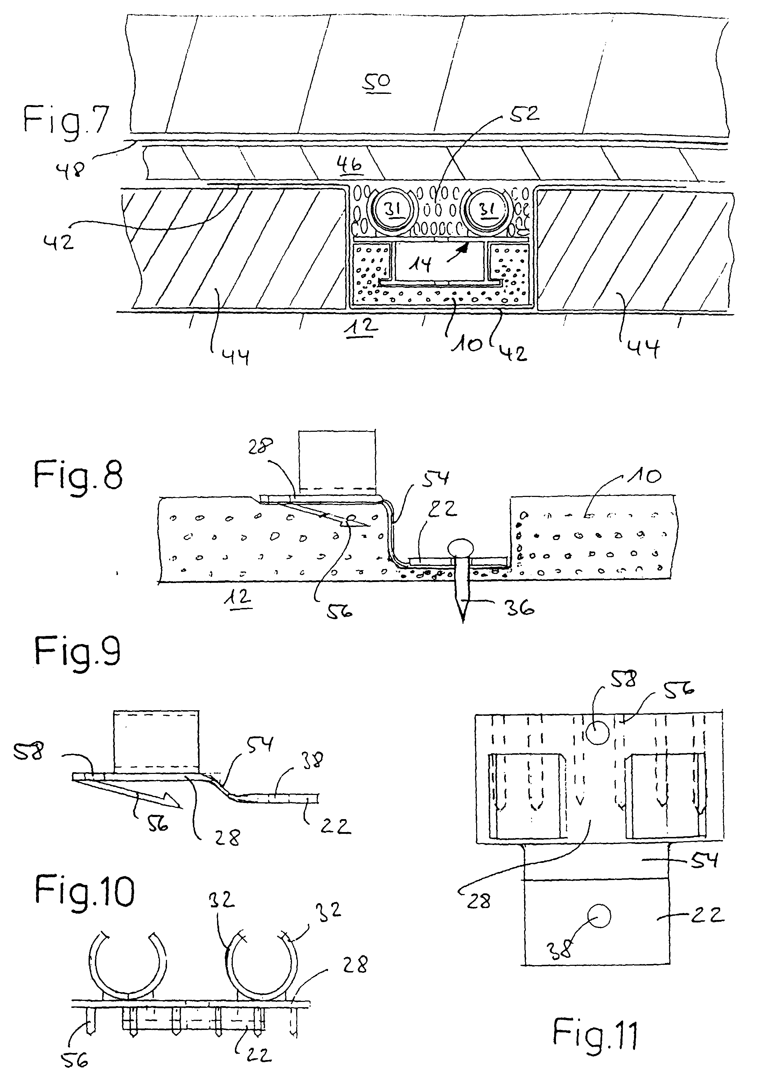

Fig. 7 zeigt die im Zusammenhang mit den Fig. 1 bis 6 gezeigte Anordnung im eingebauten Zustand bei fertig verlegtem Estrich, wobei gemäß Fig. 7 der erfindungsgemäße Isolierstreifen 10 zusätzlich dadurch weitergebildet ist, daß ein isolierender Folienstreifen 42, beispielsweise aus PVC oder Aluminium, sich bodenseitig entlang dem Isolierstreifen 10 erstreckt und beidseitig über die Breite des Isolierstreifens 10 um ein Maß herausragt, das ein Verlegen in der in der Fig. 7 gezeigten Art gestattet: Beidseitig der Anordnung aus Isolierstreifen 10 bzw. Rohrschelle 14 erstreckt sich nämlich der Folienstreifen 42 bis zur Höhe einer seitlichen, bauseitigen Isolierung 44 (die beispielsweise 50 mm bezogen auf den unterliegenden Rohboden 12 hoch sein kann) und einen vorbestimmten Abstand in horizontaler Richtung zwischen dieser Isolierung 44 und einer aufliegenden Dämmschicht 46 zur Trittschalldämmung.

Auf dieser Dämmschicht 46 liegt dann noch eine weitere Schutzfolie 48 bzw. der darauf gebildete Estrich 50.

Der Hohlraum zwischen Basisplatte 28 und der Dämmschicht 46 ist durch grobkörniges Granulat 52 verfüllt, wobei der beidseitig hochgezogene Folienstreifen 42 in vorteilhafter Weise verhindert, daß das Granulat 52 unbeabsichtigt in bei der Montage zwangsläufig entstehende, seitliche Zwischenräume zwischen dem Isolierstreifen 10 und der umgebenden, bauseitigen Isolierung 44 rutscht und so nachteilige Isolationslücken hervorrufen könnte.

Fig. 8 zeigt eine alternative Ausbildung der Rohrschelle zum Fixieren eines Paares von (Heizungs-) Rohren auf dem erfindungsgemäßen Isolierstreifen 10 bzw. dem unterliegenden Rohfußboden 12: Wie in der seitlichen Montageansicht gemäß Fig. 8 bzw. den Einzelansichten in den Fig. 9 bis 11 zeigt, ist gemäß dieser alternativen Ausführungsform die Basisplatte 28 nicht über feste, starre Stege mit der Druck- bzw. Bodenplatte 22 verbunden, sondern über einen elastischen Steg 54. Auf diese Weise ist vorteilhaft die Anpassung an verschiedene Dicken des Isolierstreifens 10 möglich (die Ausbildung der Rohrschelle gemäß den Fig. 2 bis 5 legt demgegenüber den vertikalen Abstand zwischen Basisplatte 28 und unterer Druckplatte 22 konstant fest).

Während die Druckplatte 22 nach wie vor über eine Schraube 36 (bzw. einen Bolzen), die durch den Durchbruch 38 in der Druckplatte 22 hindurchgreifen, mit dem Rohfußboden 12 fest verbindbar ist, erfolgt in dieser Ausführungsform eine (notwendige) getrennte Fixierung der Basisplatte 28 über eine Mehrzahl von spitzwinklig und bodenseitig an der Basisplatte 28 vorgesehenen Haken 56. Wie in der Fig. 8 bzw. in der Fig. 9 gezeigt, erstrecken sich diese Haken 56 vom rückseitigen Endbereich der Basisplatte 28 in Richtung auf den elastischen Steg 54 und sind endseitig mit Widerhaken versehen. Zusätzlich weist die Basisplatte 28 im rückwärtigen Bereich einen weiteren Durchbruch 58 zur (ergänzenden oder alternativen) Schraubmontage auf.

Wie in der Fig. 8 angedeutet, wird die Basisplatte 28 mit der darauf vorgesehenen Klemmbackenanordnung 30 über die mit den Widerhaken versehenen Haken 56 fest im oberen Bereich des Isolierstreifens 10 verhakt, während die Druckbzw. Bodenplatte 22 in der vorbeschriebenen Weise (vgl. Fig. 1) durch Kompression des unterliegenden Isolierschaums fest mit dem Rohfußboden 12 verbunden ist. Je nach Höhe des Isolierstreifens 10 ist entsprechend der die Bodenplatte 22 mit der Basisplatte 28 verbindende, elastische Steg mehr oder weniger stark geneigt (Fig. 8 beschreibt insoweit den maximalen vertikalen Abstand zwischen Bodenplatte 22 und Basisplatte 28).

Alle vorstehend beschriebenen Ausführungsformen haben den Vorteil gemeinsam, daß der Isolierstreifen 10 aus geschäumtem Material das (lösbare) Einführen der jeweiligen Rohrschelle 14 gestattet, und der entsprechende Raum (Innenraum des äußeren Ringschlitzes 18) nicht abfallverursachend ausgebrochen werden muß, sondern durch Wirkung der Druckplatte 22 bodenseitig komprimiert wird. Erfindungsgemäß sorgt diese komprimierte Schicht aus Isolationsmaterial im montierten Zustand dann nicht nur für vorteilhafte Wärmeisolation, sondern wirkt zudem optimal trittschalldämpfend.

Vorteilhaft gestattet zudem die periodische Anordnung der Ringschlitzkombinationen 16 ein einfaches Bemessen bzw. Ablängen von zu verlegenden Rohrleitungen: Der Monteur hat lediglich durch Abzählen der -- belegten oder unbelegten -- Ringschlitzanordnungen und Multiplikation mit dem jeweils konstanten, dazwischenliegenden Abstand die benötigte Gesamt- (Rohr-) Länge zu ermitteln.

Das vorteilhafte in periodischen Abständen -- beispielsweise 100 cm -- mit erfindungsgemäßen Rohrschellen 14 vorbestückte Isolier-Streifenmaterial ist durch seine elastischen Eigenschaften einfach rollbar und erleichtert dadurch den Transport zum Einsatzort. Je nach Einsatzzweck wird dann vor Ort durch den Monteur dieser Isolierstreifen entsprechend dem gewünschten Rohrverlauf verlegt, wobei ggf. zusätzliche Rohrschellen -- beispielsweise im Bereich von Biegungen -- eingesetzt werden, oder aber vormontierte Rohrschellen entfernt werden können.

Als besonders vorteilhaft hat sich herausgestellt, daß die aus zwei konzentrischen Ringschlitzen bestehende Ringschlitzanordnung auch das kontrollierte, horizontale Biegen des Isolierstreifens im auf einem Rohfußboden aufliegenden Zustand erleichtert, da im Bereich der konzentrischen Ringschlitze dann die durch eine Biegung hervorgerufene Materialkompression bzw. -dehnung erfolgt und teilweise ausgeglichen wird, ohne daß es -- wie etwa bei Vollmaterial -- zur Knick- oder Wellenbildung kommt.

Gemäß alternativen Ausführungen der vorstehend beschriebenen Erfindungsweiterbildungen ist es auch möglich, die Ringschlitzanordnung auf nur einen Ringschlitz (alternativ: in der Draufsicht oval oder polygonal) zu beschränken, oder aber eine Mehrzahl von ineinander geschachtelter Schlitzanordnungen vorzusehen, wobei, je nach Art des Isoliermaterials und der Schlitzform, eine solche Schlitzbildung beispielsweise mechanisch (d. h. durch Fräsen od. dgl.) oder etwa thermisch (durch lokales Schmelzen) erfolgen kann.

Alternativ oder ergänzend ist es möglich, eine Ringschlitzanordnung vorzusehen (vgl. Fig. 6, Mitte), in welcher nur ein Teil, z. B. der zentrale Bereich, des Isoliermaterials entfernt ist, während ein äußerer Ringschlitz bestehen bleibt. Die optimale Gestaltung einer jeweiligen Ringschlitzanordnung wird aus der Art, Dicke bzw. dem geplanten Verlauf des Isolierstreifens ergeben.

Auch ist es möglich, die Druck- bzw. Bodenplatte 22 der weiterbildungsgemäßen Rohrschelle 14 zur Vereinfachung des Einsetzens entsprechend anders auszubilden: Während im vorbeschriebenen Ausführungsbeispiel (vgl. Fig. 1) die Druckplatte 22 eine hexagonale Kontur besitzt und randseitig eine (zur Vereinfachung des Eindringens in das Isoliermaterial) spitz zulaufende Form aufweist, ist es alternativ auch möglich, die Druckplatte 22 als Kombination von zwei oder mehr, voneinander getrennten Flügeln zu realisieren, die ggf. eine Neigung bzw. Steigung aufweisen können, scharfkantige Eingriffs- (Schneide) Kanten besitzen und in der Art einer Schraube od. dgl. in das Isoliermaterial im Bereich der Ringschlitzanordnung 16 einführbar sind.

Darüber hinaus ist es auch möglich, eine erfindungsgemäße Rohrschelle 14 mehrteilig auszubilden, ggf. modular steckbar zu gestalten oder aber die Klemmbackenanordnung 30 im Querschnitt trapez- bzw. schwalbenschwanzförmig in der offenbarten Weise zu realisieren. Ferner ist es möglich, zusätzlich die vorliegende Druckplatte 22 über bodenseitige Abstandsstücke gegenüber dem unterliegenden Rohboden abzustützen.

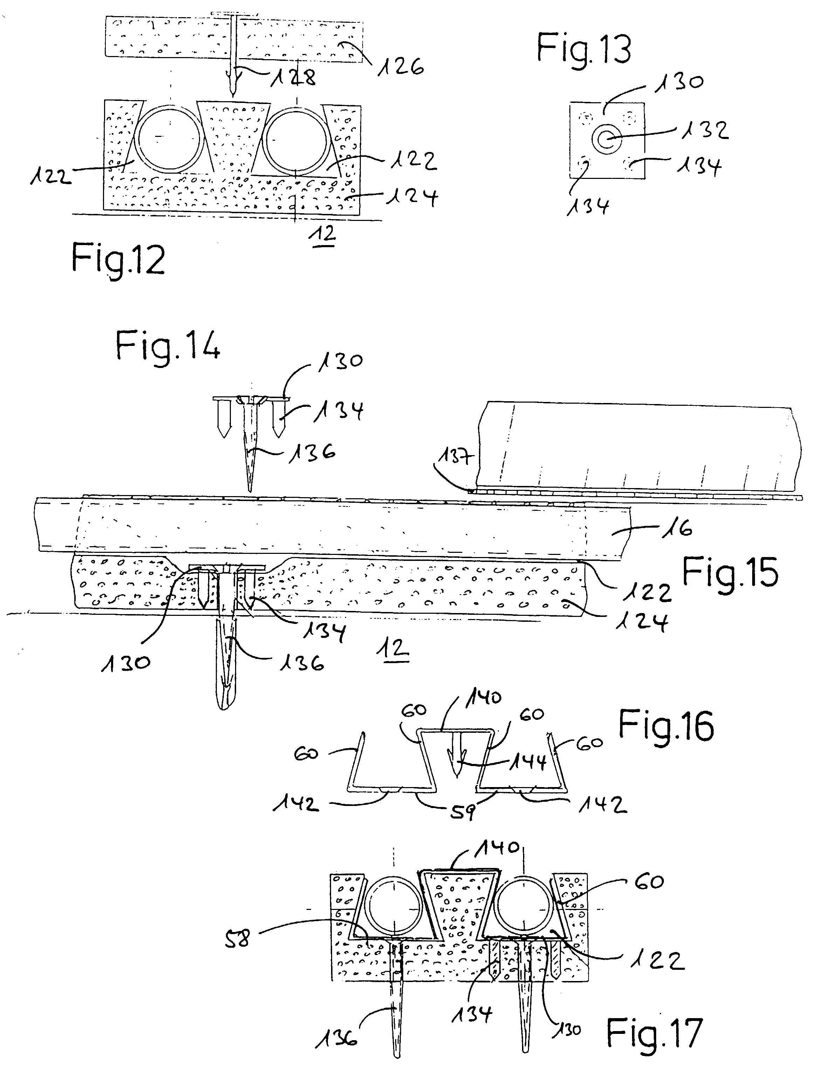

Im Zusammenhang mit den Fig. 12 bis 17 werden nachfolgend weitere Ausführungsformen der vorliegenden Erfindung beschrieben, die auf dem Prinzip des Führens bzw. des Befestigens eines Rohres an drei Punkten einer im Querschnitt trapez- bzw. schwalbenschwanzförmigen Halterung beruhen.

Die in der Fig. 12 gezeigte Ausführungsform setzt allerdings entlang der zu verlegenden Rohre keine diskreten, in periodischen Abständen angeordnete Befestigungselemente der vorstehend beschriebenen Arten ein, sondern führt die Rohre in Nuten des sich durchgehend über die gesamte Länge der zu verlegenden Rohre erstreckenden Isoliermaterials. Dabei weisen die in der Fig. 12 in der geschnittenen Seitenansicht gezeigten Nuten bzw. Ausnehmungen 122 im Isolationsmaterial 124 selbst eine offene Trapez- bzw. Schwalbenschwanzform auf und die Nuten führen zu einer Führungsbzw. Klemmwirkung, die für eine Nutkontur nicht auf einen bestimmten Rohrdurchmesser festgelegt ist, sondern vielmehr Rohre verschiedenen Durchmessers aufnehmen kann.

Während bei den vorstehend beschriebenen Ausführungsbeispielen die Flexibilität des eingesetzten Materials, insbesondere für die Schellen, für die Führungs- bzw. Klemmwirkung der Vorrichtung entscheidend waren, wird dies im Fall der Fig. 12 entscheidend von den Eigenschaften des verwendeten Isolationsmaterial bestimmt, insbesondere von dessen Elastizität bzw. Steifigkeit. Je nach Einsatzzweck wird der Fachmann geeignete Materialparameter des Isolationsmaterials, beispielsweie PE-Schaum, auswählen bzw. einstellen.

Durch die in der Fig. 12 gezeigte, integrale Ausbildung einer Führung bzw. Halterung mit eingeformten Nuten wird gleichzeitig vorteilhaft eine Isolierung zum darunterliegenden Rohfußboden 12 durch die zwischen den Bodenflächen der Nut und dem Rohfußboden liegende Schicht aus Isoliermaterial gewährleistet. Zusätzlich findet eine allseitige Umschäumung der Nuten mit den darin gehaltenen Rohren statt.

Eine Isolation bzw. (Trittschall-) Dämmung nach oben kann bei der in Fig. 12 gezeigten Ausführungsform durch ein zusätzliches oberes Dämmelement 126 erfolgen, das mittels eines mit einem Widerhaken od. dgl. versehenen Stifts 128 auf die unterliegende Befestigungsvorrichtung aufsteckbar ist.

Bevorzugt ist die in Fig. 12 gezeigte, durchgehende Befestigung auf ihrer (planen) Oberfläche mit einer kontinuierlichen Maßeinteilung versehen, die ein einfaches und fehlerfreies Messen einer jeweils benötigten Länge für den Installateur gestattet.

Wird als Material für die Befestigungsvorrichtung gemäß Fig. 12 ein PE-Schaum gewählt, der geschlossenzellig und damit wasserundurchlässig ist, gestattet zudem die in Fig. 12 gezeigte, nach oben offene Ausbildung eine einfache Dichtigkeitsprüfung mit dem bloßen Auge, denn aus den verlegten Rohren austretendes Wasser würde sofort an einer Undichtigkeitsstelle bemerkbar sein und nicht unbemerkt nach unten abfließen.

Die Ausführungsform gemäß Fig. 12 muß nicht zwangsläufig stets mit einem aufliegenden Dämmelement 126 versehen sein -- vielmehr genügt es zur Erfüllung der gesetzlichen Auflagen betreffend Isolation, daß die Rohre nach unten (d.h. zum unterliegenden Rohfußboden hin) isoliert sind. Eine nach oben offene Anordnung würde dann dem Prinzip einer Fußbodenheizung folgend, zusätzliche Wärme in den Raum abstrahlen, wenn lediglich ein Bodenbelag darübergelegt werden würde.

In den Fig. 13 und 14 ist in der Draufsicht bzw. der Seitenansicht eine Befestigungsplatte 130 zum Festlegen der in der Fig. 12 gezeigten Vorrichtung auf einem Rohboden gezeigt, und die Seitenansicht gemäß Fig. 15 zeigt eine Schnittansicht durch eine solche Vorrichtung. Die in der Draufsicht gemäß Fig. 13 im wesentlichen quadratische Befestigungsplatte 130 weist neben einem mittigen Durchbruch 132 vier, sich jeweils senkrecht zur Platte 130 erstreckende, an ihrem Ende spitz zulaufende Distanzstifte 134 auf. Zum Zweck der Befestigung greift eine Schraube 136 in den Durchbruch 132 ein und wird in den Rohboden 12 getrieben (vergleiche Fig. 15), während die Distanzstifte 134 so bemessen sind, daß sie sich im befestigten Zustand durch das Isoliermaterial vom Boden einer Nut 122 bis zur Oberfläche des Rohbodens 12 erstrecken. Wie in der Fig. 15 gezeigt, wird durch das Anziehen der Schraube 136 bei aufstehenden Distanzstiften 134 eine leichte Deformation des Isoliermaterials bewirkt, wodurch die Anordnung zusätzlich Halt bzw. Festigkeit erhält. Bei der in der Fig. 15 gezeigten Ausführungsform wird die Anordnung nicht zusätzlich mit einem aufliegenden Dämmelement 126 versehen -- lediglich eine PE-Abdeckfolie 137 liegt zwischen der (planen) Oberfläche des Befestigungselements und dem aufliegenden Estrich.

Die lediglich aus Isoliermaterial bzw. Isolierschaum bestehende Ausführungsform gemäß Fig. 12 kann zusätzlich durch einen Schellen- bzw. Klemmeneinsatz punktweise verstärkt werden, der in Fig. 16 in der Seitenansicht gezeigt ist und der in der Fig. 17 gezeigten Weise auf bzw. in die Vorrichtung gemäß Fig. 12 einsteckbar ist.

Der Klemmeneinsatz weist zwei Paare von sich jeweils trapezartig schräg aufwärts von einer Druckplatte 58 erstreckenden, seitlichen Haltestegen 60 auf, wobei die beiden innenliegenden durch einen oberen Steg 140 verbunden sind. Die Druckplatten 59 weisen jeweils mittig einen Durchbruch 142 auf.

Über einen mit einem Widerhaken versehenen Befestigungszapfen 144 ist der Klemmeneinsatz 138 so auf dem in der Fig. 12 gezeigten Element befestigbar, daß die aus den Druckplatten 58 bzw. den seitlichen Haltestegen 60 gebildeten Trapez- bzw. Schwalbenschwanzkonturen innen an den Nuten 122 anliegen bzw. diesen folgen.

Wie in der Fig. 17 für die Seite des linken Vorlaufrohres gezeigt ist, kann dann die gesamte Anordnung lediglich mittels der Schraube 136, die durch den Durchbruch 142 und das darunterliegende Isoliermaterial hindurchgreift, festgelegt werden. Alternativ kann, wie in der Fig. 40 für die Seite des rechten Rücklaufrohres gezeigt, der Klemmeneinsatz auf einer (in den Fig. 13,14 beschriebenen) Befestigungsplatte 130 aufliegen, so daß die Schraube 136 in diesem Fall durch den Durchbruch 142 des Klemmeneinsatzes 138 sowie den Durchbruch 132 der Befestigungsplatte 130 hindurchgreift.

Je nach verwendetem Isoliermaterial und dessen Eigenschaften ist dabei der Klemmeneinsatz 138, der bevorzugt zur Verbesserung der Festigkeitseigenschaften der Haltevorrichtung bzw. an Biegestellen od. dgl. eingesetzt wird, fest in das Isoliermaterial eingeschäumt, oder aber wird nachträglich eingesetzt. Entsprechendes gilt für die Befestigungsplatte 130.

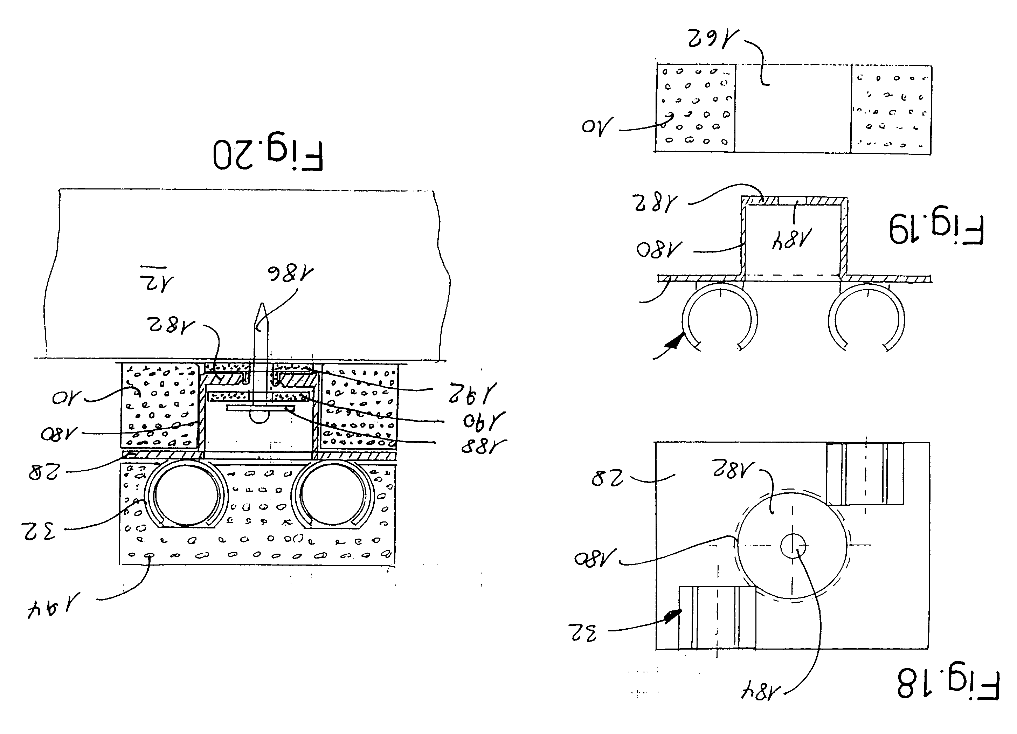

Die Fig. 18 bis 20 zeigen weitere Ausführungsformen. Hier ist das Befestigungselement einstückig ausgebildet mit einer an die Basisplatte 28 mit den darauf vorgesehenen Schellen 32 bodenseitig einstückig angeformten zylindrischen Wanne 180, die bodenseitig eine kreisförmige Bodenplatte 182 besitzt. Durch einen in dieser Bodenplatte 182 gebildeten Durchbruch 184 ist wahlweise eine Schraub- oder Schußbefestigung möglich, wobei die zylindrische Wanne 180 die Möglichkeit zum Ansetzen eines entsprechenden Schießgerätes bietet.

Diese Ausführungsform bietet zwar nicht die flexible Möglichkeit der Höhenanpassung an verschiedene, zu verlegende Isolationsdicken -- durch die einstückige Ausbildung des Befestigungselements ist jedoch eine preiswerte und einfache Herstellung möglich, so daß sich Kostenvorteile realisieren lassen müßten. Entsprechend liegt die Höhe eines in Verbindung mit dem in den Fig. 18 und 19 gezeigten Element zu benutzenden Isolierstreifens 10 durch die Höhe der zylindrischen Wanne 180 fest.

Die Fig. 20 zeigt in der geschnittenen Seitenansicht ein Beispiel einer montierten Befestigungsvorrichtung gemäß der in den Fig. 18 und 19 gezeigten Ausführungsform. Die Bodenplatte 182 der Wanne 180 ist mittels eines Schießbolzens 186 im unterliegenden Rohboden 12 verankert, wobei der Bolzen 186 über eine Metallscheibe 188 und eine obere Gummi-Dämmscheibe 190 zur Schallentkopplung auf die Bodenplatte 182 drückt. Bodenseitig ist zusätzlich zum Zweck der

Schallentkopplung eine untere Dämmscheibe 192 zwischen dem Rohboden 12 und der Bodenplatte 182 vorgesehen, wobei die untere Dämmscheibe 182 sich bevorzugt auch in den Durchbruch 184 zwischen Bolzen 186 und Bodenplatte 182 erstreckt.

Die in der Fig. 20 gezeigte Anordnung kann zusätzlich mit einem oberen Isolierstreifen 194 bedeckt sein, der die Schellen 32 bzw. die darin gehaltenen Rohre umfaßt und sich bis zur Oberfläche der Basisplatte 28 erstreckt.

Die Fig. 21 bis 23 beschreiben Weiterbildungen bzw. Ausführungsformen, die insbesondere für die im Zusammenhang mit den Fig. 12 bis 17 beschriebenen Ausführungsformen geeignet sind. Auch diese zusätzlichen Ausführungsformen weisen einen zum Einführen eines Schießwerkzeugs geeigneten Durchbruch auf.

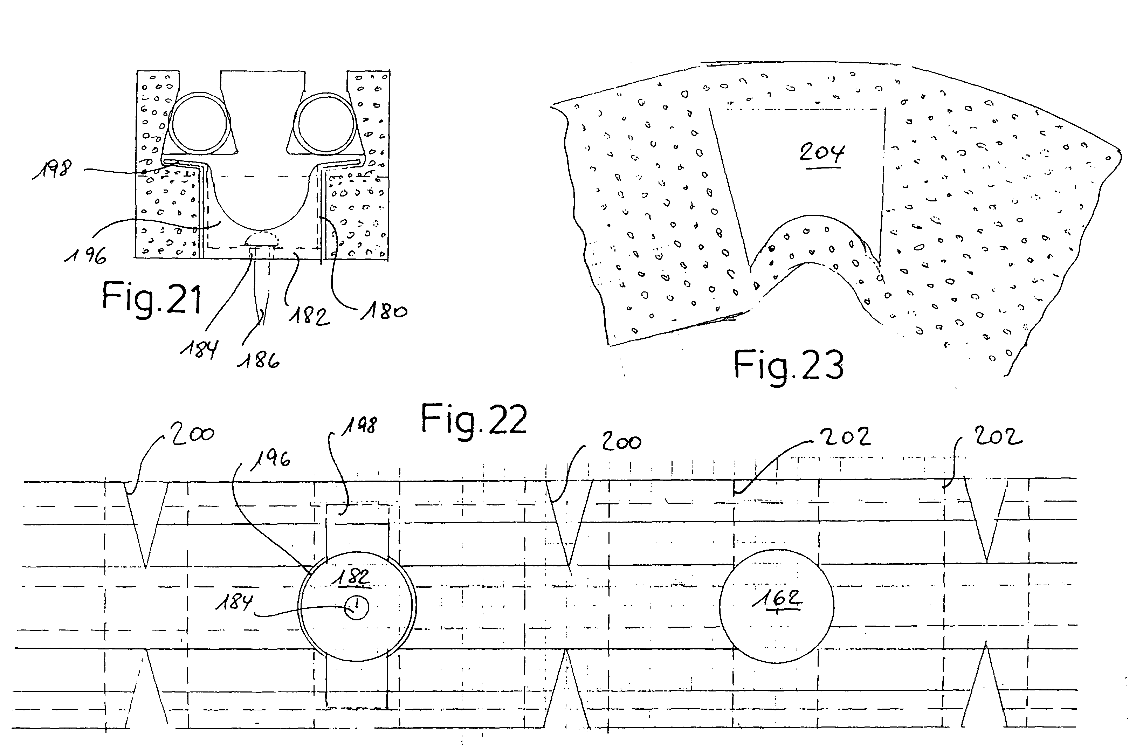

So weist das in der Fig. 21 in der Seitenansicht und in der Fig. 22 in der Draufsicht gezeigte Befestigungselement eine sich zylindrisch aufwärts von einer Bodenplatte 182 erstreckende Seitenwand 196 auf, an die zwei, einander gegenüberliegende, seitlich auswärts abgewinkelte Randelemente 198 zum Eingreifen in eine jeweilige der Nuten 122 angeformt sind. Im in Fig. 21 dargestellten Ausführungsbeispiel ist die Seitenwand 196 im Bereich zwischen den einander gegenüberliegenden Randelementen 198 heruntergezogen bzw. abgesenkt; aber jede beliebige andere geeignete Ausbildung eines Klemmelements ist möglich -- z. B. als reines U-Profil im Falle einer in der Draufsicht quadratischen Ausnehmung (statt der im dargestellten Ausführungsbeispiel in der Draufsicht runden Ausnehmung).

Aus der Draufsicht gemäß Fig. 22 ergeben sich zusätzlich seitlich in periodischen Abständen angeordnete Biegekeile 200, die sich im wesentlichen über die gesamte Höhe des Isolationsmaterialblocks 124 in das Isolationsmaterial einschneiden und so eine einfache Biegung ermöglichen. Zusätzlich sind an den mit 202 bezeichneten, gestrichelten Positionen bodenseitige Querdurchbrüche im Isolationsmaterial 124 vorgesehen, durch welche querende Leitungen -- Heizungsrohre, elektrische Leitungen od. dgl. -- geführt werden können.

Fig. 23 zeigt -- zur Einpassung eines Befestigungselements z. B. gemäß Fig. 21 oder zum Ermöglichen einer gebogenen Verlegung -- eine quadratische Ausnehmung 204 (Draufsicht), die sich im gebogenen Zustand in der in der Fig. 23 gezeigten Weise verformt bzw. den verformten Materialabschnitt an einer Krümmungsinnenseite aufnimmt.

Eine solche Ausnehmung muß nicht in dem gezeigten Ausführungsbeispiel quadratisch sein -- sie kann auch jede andere, das Biegen des Streifens vereinfachende Form bzw. Kontur aufweisen.

## Patentansprüche

1. Vorrichtung zum Festlegen von Rohrleitungen, insbesondere der Rohre eines Heizungssystems, auf einem Rohfußboden (12), einer Geschoßdecke od. dgl., mit mindestens einem von einer Rohrleitung (31) durchsetzbaren Halteelement (14) und einer die Rohrleitung (31) gegenüber dem Rohfußboden (12) thermisch isolierenden Isoliereinrichtung (10), wobei die Isoliereinrichtung als streifenförmige Schicht (10) aus isolierendem Material realisiert ist, die in ihrer dem Rohfußboden (12) entgegengesetzten Oberfläche eine Mehrzahl von mit einem eine vorbestimmte Tiefe (a) in das isolierende Material eindringenden, ringförmigen Schlitz (18,20) umschlossenen Bereiche (16) aufweist, das Halteelement (14) fest im Rohfußboden (12) veranderbar und zum Komprimieren des isolierenden Materials innerhalb eines umschlossenen Bereichs (16) gegen den Rohfußboden (12) im montierten Zustand ausgebildet ist.

2. Vorrichtung nach Anspruch 1, dadurch gekennzeichnet, daß die Mehrzahl von umschlossenen Bereichen (16) entlang der streifenförmigen Schicht (10) im wesentlichen in konstanten Abständen gebildet ist.

3. Vorrichtung nach Anspruch 1 oder 2, dadurch gekennzeichnet, daß der ringförmige Schlitz (18,20) im wesentlichen kreisringförmig ist.

4. Vorrichtung nach einem der Ansprüche 1 bis 3, dadurch gekennzeichnet, daß mindestens einer der umschlossenen Bereiche (16) eine Mehrzahl von zueinander konzentrischen, kreisringförmigen Schlitzen (18,20) aufweist.

5. Vorrichtung nach einem der Ansprüche 1 bis 4, dadurch gekennzeichnet, daß das Halteelement (14) eine bodenseitige, im montierten Zustand das isolierende Material komprimierende Druckplatte (22) aufweist.

6. Vorrichtung nach Anspruch 5, dadurch gekennzeichnet, daß die Druckplatte (22) einen Durchbruch (38) zum Hindurchführen einer Schraube (36) od. dgl. Befestigungselement für den Rohfußboden (12) aufweist.

7. Vorrichtung nach Anspruch 5 oder 6, dadurch gekennzeichnet, daß die Druckplatte (22) einen im wesentlichen hexagonalen Grundriß aufweist, dessen größter Durchmesser geringfügig größer als der maximale Durchmesser des ringförmigen Schlitzes (18,20) ist.

8. Vorrichtung nach einem der Ansprüche 5 bis 7, dadurch gekennzeichnet, daß die Druckplatte (22) mindestens eine, randseitig spitz zulaufende Kante aufweist.

9. Vorrichtung nach Anspruch 5 oder 6, dadurch gekennzeichnet, daß die Druckplatte (22) eine Mehrzahl von schraubenartig geneigten Flächenstücken aufweist, die zum Eindringen in das Isoliermaterial ausgebildet sind.

10. Vorrichtung nach einem der Ansprüche 1 bis 9, dadurch gekennzeichnet, daß die streifenförmige Schicht (10) rohbodenseitig mit einer Folienschicht (42) versehen ist, die eine sich beidseitig über die Breite der streifenförmigen Schicht (10) hinaus erstreckende Breite aufweist.

## Claims

1. Device for fixing pipework, in particular the pipes of a heating system, on an unfinished floor (12), an intermediate floor or the like, comprising at least one holding element (14) which can be traversed by pipework (31) and an insulating means (10) thermally insulating the pipework (31) relative to the unfinished floor (12), wherein the insulating means is in the form of a strip-shaped layer (10) of insulating material provided in its surface opposite the unfinished floor (12) with a plurality of regions (16) enclosed by an annular slot (18,20) penetrating into the insulating material by a predetermined depth (a), and the holding element (14) can be firmly anchored in the unfinished floor (12) and is designed to compress the insulating material within an enclosed region (16) against the unfinished floor (12) in the mounted state.

2. Device according to claim 1, characterised in that the plurality of enclosed regions (16) are formed at substantially constant intervals along the strip-shaped layer (10).

3. Device according to claim 1 or claim 2, characterised in that the annular slot (18, 20) is substantially circular.

4. Device according to one of claims 1 to 3, characterised in that at least one of the enclosed regions (16) has a plurality of concentric circular slots (18, 20).

5. Device according to one of claims 1 to 4, characterised in that the holding element (14) is provided on its bottom with a pressure plate (22) compressing the insulating material in the mounted state.

6. Device according to claim 5, characterised in that the pressure plate (22) has an opening (38) for the passage of a screw (36) or similar securing element for the unfinished floor (12).

7. Device according to claim 5 or claim 6, characterised in that the pressure plate (22) has a substantially hexagonal contour, the largest diameter of which is slightly larger than the maximum diameter of the annular slot (18, 20).

8. Device according to one of claims 5 to 7, characterised in that the pressure plate (22) has at least one tapering edge.

9. Device according to claim 5 or claim 6, characterised in that the pressure plate (22) has a plurality of helically inclined flat pieces designed to penetrate into the insulating material.

10. Device according to one of claims 1 to 9, characterised in that the strip-shaped layer (10) is provided on the unfinished floor side with a film layer (42) having a width such that it extends beyond the width of the strip-shaped layer (10) on either side.

## Revendications

1. Dispositif pour fixer des conduites tubulaires. en particulier les tubes d'un système de chauffage, sur un fond (12) d'appui primaire, un plancher d'étage, ou similaire, comprenant au moins un élément de support (14) susceptible d'être traversé par une conduite tubulaire (31) et un organe d'isolation (10) isolant thermiquement la conduite tubulaire (31) par rapport au fond (12) d'appui primaire, dans lequel l'organe d'isolation est réalisé comme une couche en forme de bande (10) en matériau isolant, et qui présente, sur surface opposée au fond (12) d'appui primaire, une pluralité de zones entourantes (16) munies d'une fente annulaire (18, 20) plongeant sur une profondeur prédéterminée (a) dans le matériau isolant, et en ce que l'élément de support (14) est réalisé en étant susceptible d'être ancré fermement dans le fond (12) d'appui primaire, de façon à comprimer le matériau isolant à l'intérieur d'une zone entourante (16) contre le fond (12) d'appui primaire, à l'état monté.

2. Dispositif selon la revendication 1, caractérisé en ce que la pluralité des zones entourantes (16) est réalisée le long de la couche (10) en forme de bande, selon un écartement sensiblement constant.

3. Dispositif selon la revendication 1 ou 2, caractérisé en ce que la fente de forme annulaire (18, 20) est sensiblement de forme annulaire circulaire.

4. Dispositif selon l'une des revendications 1 à 3, caractérisé en ce qu'au moins l'une des zones entourantes (16) comporte une pluralité de fentes de forme annulaire circulaire (18, 20), concentriques les unes aux autres;

5. Dispositif selon l'une des revendications 1 à 4, caractérisé en ce que l'élément de support (14) comporte une plaque de pressage (22) comprimant à l'état monté le matériau isolant.

6. Dispositif selon la revendication 5, caractérisé en ce que la plaque de pressage (22) comporte une découpe (38) pour permettre le passage d'une vis (36) ou d'un élément de fixation similaire pour le fond (12) d'appui primaire.

7. Dispositif selon la revendication 5 ou 6, caractérisé en ce que la plaque de pressage (22) présente un profilé extérieur sensiblement hexagonal, et dont le plus grand diamètre est légèrement supérieur au diamètre maximal de la fente de forme annulaire (18, 20).

8. Dispositif selon l'une des revendications 5 à 7, caractérisé en ce que la plaque de pressage (22) comporte au moins une arête en pointe du côté du bord.

9. Dispositif selon la revendication 5 ou 6, caractérisé en ce que la plaque de pressage (22) comporte une pluralité de pièces de surface, inclinée de façon hélicoïdale, et qui sont réalisées pour être introduites dans le matériau isolant.

10. Dispositif selon la revendication 1 ou 9, caractérisé en ce que la couche (10) en forme de bande est munie, du côté du fond d'appui primaire, d'une couche en feuille (42) qui présente une largeur s'étendant des deux côtés sur la largeur de la couche (10) en forme de bande.
